(19) Europäisches Patentamt
European Patent Office
Office européen des brevets

(11) Publication number: **0 390 291 A1**

(12) # EUROPEAN PATENT APPLICATION

(21) Application number: 90200758.2

(22) Date of filing: 28.03.90

(51) Int. Cl.5: C08K 5/02, C08K 5/03, C08K 5/06, C08K 3/22, C08K 3/38, C08L 73/00

(30) Priority: 05.05.89 GB 8910388
31.03.89 US 332249
31.03.89 US 332636

(43) Date of publication of application:
03.10.90 Bulletin 90/40

(84) Designated Contracting States:
AT BE CH DE DK ES FR GB GR IT LI LU NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: Syrier, Johannes Leopold Marie
Badhuisweg 3
NL-1031 CM Amsterdam(NL)
Inventor: Danforth, Richard Louis
2306 Wallingford Drive
Missouri City, Texas 77459(US)
Inventor: Smith, Darlene Gayle
675 Piney Creek Road
Bellville, Texas 77418(US)

(74) Representative: Aalbers, Onno et al
P.O. Box 302
NL-2501 CH The Hague(NL)

(54) **Flame retardant compositions.**

(57) Flame-retardant polymer compositions comprising a linear alternating copolymer of carbon monoxide and at least one ethylenically unsaturated compound, and at least a flame-retarding quantity of an organohalogen compound containing one or more polyhalogen substituted rings and having a halogen content of at least 50% m, and/or a compound selected from the group consisting of antimony trioxide, metal borates and mixtures thereof.

EP 0 390 291 A1

# FLAME RETARDANT COMPOSITIONS

The present invention relates to flame-retardant polymer compositions, and more in particular to such flame-retardant compositions based on copolymers of carbon monoxide and at least one ethylenically unsaturated compound.

The general class of polymers of carbon monoxide and one or more ethylenically unsaturated compounds has been known for some years. According to U.S. Patent No. 2,495,286, such polymers of relatively low carbon monoxide content are produced in the presence of free radical catalysts such as benzoyl peroxide. British Patent No. 1,081,304 discloses such polymers of higher carbon monoxide content produced in the presence of alkylphosphine complexes of palladium as catalyst.

More recently, the class of linear alternating polymers of carbon monoxide and olefinically unsaturated compounds, now known as polyketones, has become of greater interest, in part because of improved methods of production. Such methods are shown, for example, by European Patent Applications Nos. 181 014, and 121 965. The disclosed processes employ, inter alia, a compound of a Group VIII metal such as palladium, an anion of a non-hydrohalogenic acid having a pKa below 2 and a bidentate ligand of phosphorus. The resulting polymers are generally high molecular weight thermoplastic polymers having utility in the production of articles such as containers for food and drink and parts for the automotive industry or structural members for use in the construction industry.

With regard to any plastic material employed in a public application, some concern must be shown for the consequences of the material catching fire and burning. It is known that some polymers will burn more easily than others. Polymers such as e.g. polyvinylchloride produce, upon combustion, gaseous compounds which have a flame-retarding effect. With polymers, which do not produce such flame retardant gaseous compounds upon combustion, it is common practice to mix said polymers with compounds which have the potential to slow down the binder ignition and/or the growth of the fire. Such compounds are generally referred to as flame retardant compounds. The flame retarding effect of such compounds generally stems from a chemical reaction of said compounds at an elevated temperature, e.g. decomposition, which results in the generation of flame retardant compounds.

In contrast to many other polymers, the hereinbefore mentioned linear alternating copolymers of carbon monoxide and at least one ethylenically unsaturated compound will generally be characterised by a very high melting point, the actual value of said melting point being closely related to the nature of said at least one unsaturated compound. Said high melting points may introduce a problem in the preparation of flame-retarding compositions based on said polymers, as this preparation will generally require processing temperatures which are considerably higher than said melting points. As is mentioned also in Applicant's copending Patent Application GB-8910011.0, such high processing temperatures may sometimes result in a premature decomposition of the flame retardant compounds and/or depending on the nature of such flame-retardant compounds, in polymer composites showing a not always acceptable degree of discoloration. It has been proposed in US Patent No. 4,761,449 to include an alkaline earth metal (bi)carbonate such as calcium carbonate in the said copolymers. While these compositions show improved flame retardation, they are still open to improvement. In particular, the compositions containing up to 25% by weight of calcium carbonate still have Limiting Oxygen Index (LOI) values of only 27-27.5. LOI values of 30 or greater are preferred for many commercial applications. In addition, the mechanical properties of the polyketone polymers should be retained as much as possible, so that the amount of flame retardant necessary to obtain commerical compositions is as low as possible. Hence it can be appreciated that there is still further need to improve the performance of flame-retardant compositions based on the carbon monoxide copolymers mentioned hereinbefore.

The problem underlying the present invention is to develop flame retardant compositions based on said carbon monoxide copolymers, which can be processed at high temperatures without resulting in compositions showing an unacceptable discoloration or an unacceptable loss of mechanical strength.

As a result of continuing and extensive research and experimentation it has surprisingly been found that it is possible to formulate flame-retardant compositions based on said carbon monoxide copolymer and selected organohalogen compounds and/or compounds which are frequently used as synergists for the decomposition of such organohalogen compounds, and which compositions show no discoloration.

This was indeed considered to be an surprising result as it is known that organohalogen compounds are able to generate acidic reacting compounds such as HCl and HBr, which acidic compounds would be expected, based on the contents of U.S. Patent 3,979,373, to induce a reaction in the polymer under the high temperature processing conditions and which could thus be expected to lead to serious problems during said processing.

The invention provides therefore flame retardant polymer compositions comprising a linear alternating copolymer of carbon monoxide and at least one ethylenically unsaturated compound, and at least a flame retarding quantity of an organohalogen compound containing one or more polyhalogen substituted rings and having a halogen content of at least 50% m, and/or a compound selected from the group consisting of antimony trioxide, metal borates and mixtures thereof.

In the present application the term "%m" refers to a mass percentage, unless indicated otherwise.

The polymers from which the compositions of the invention are produced are linear alternating polymers of carbon monoxide and at least one ethylenically unsaturated compound. Suitable ethylenically unsaturated compounds have up to 20 carbon atoms inclusive, preferably up to 10 carbon atoms inclusive and include wholly aliphatic hydrocarbons such as ethylene and other α-olefins including propylene, butene-1, octene-1 and dodecene-1; arylaliphatic compounds containing an aryl substituent on an otherwise aliphatic molecule, particularly an aryl substituent on a carbon atom of the ethylenic unsaturation, such as styrene, p-methylstyrene, m-methylstyrene and p-ethylstyrene; as well as unsaturated compounds containing hetero atoms such as O, N, P and halogen, and exemplified by compounds such as methyl acrylate, methyl methacrylate, vinyl acetate, undecenoic acid, 6-chlorohexene, N-vinylpyrrolidone and the diethylester of vinyl-phosphonic acid. Preferred polymers are copolymers of carbon monoxide and ethylene or terpolymers of carbon monoxide, ethylene and an aliphatic α-olefin of 3 or more carbon atoms, particularly propylene.

The physical properties of the polymer will be determined in part by the molecular weight and by whether the polymer is a copolymer or a terpolymer. Typical melting points are from 175 °C to 300 °C, more typically from about 210 °C to 280 °C.

Preferred terpolymers in the flame-retardant composition of the present invention are terpolymers of carbon monoxide, ethylene and propylene wherein the ethylene to propylene molar ratio in the polymer is at least 3:1.

When formulating flame retardant compositions based on the carbon monoxide copolymers, as mentioned hereinbefore, and the organohalogen compounds as mentioned hereinbefore, it was surprising to establish that the flame retardant properties of said composites were at least equal to those of the corresponding compositions containing basic-reacting flame retardant compounds, while having the additional advantage that no signs of discoloration could be observed. Even when said organohalogen compounds were combined with a synergist, as described hereinbefore, the ultimate composition showed no signs of discoloration. This was an unexpected result especially as a similar experiment employing an organohalogen compound containing no ring-substituted halogen groups, such as a chlorinated paraffin, and in the absence of a synergist, resulted in a severely discoloured, virtually black, composite.

It was furthermore established that antimony trioxide and metal borates, which compounds are generally used as synergists for the generation of flame retardant compounds from organohalogen compounds, were as such also more or less active flame retardant compounds for flame retardant polymer compositions based on the carbon monoxide copolymers mentioned hereinbefore.

The organohalogen compounds as mentioned hereinbefore will suitably be chlorine and/or bromine groups containing compounds and include polyhalogenated cycloaliphatic compounds such as perchlorodicyclopentadiene, bis(hexachloro-2-norborneno)[a,e]cyclooctane, pentabromochlorocyclohexane and hexabromocyclodecane; polyhalogenated aromatic compounds such as 2,3,4,5,6-pentabromoethylbenzene, 1,2-bis(2,4,6-tribromophenoxy)ethane, decabromodiphenyl oxide, tetrabromobisphenol A, a tetrabromobisphenol A carbonate oligomer or an ether derivative of tetrabromobisphenol A.

The metal borate to be used in the flame retardant composition of the present invention will suitably be a zinc borate and preferably a zinc borate hydrate such as $Zn[B_3O_3(OH)_5]H_2O$, $ZnO.B_2O_3.2H_2O$, $3ZnO.2B_2O_3.5H_2O$, $2ZnO.3B_2O_3.3.5H_2O$ and mixtures thereof, $2ZnO.3B_2O_3.3.5H_2O$ being a preferred hydrated zinc borate. Preferably an alkaline earth metal carbonate is also incorporated to replace a portion of the borate, both for cost reasons and for preparing mechanical properties.

Suitable flame retardant compositions may also be prepared by using combinations of the compounds mentioned hereinbefore, for example by using (1) antimony oxide and decabromodiphenyl oxide, or (2) antimony oxide and a chlorine compound selected from perchloropentacyclodecane (= perchlorodicylopentadiene, also known as perchloro-5,6-propeno-2-norbornene), the Diels Alder adduct of 1,5-cyclooctadiene and 2 molecules of hexachlorocyclopentadiene (also known as bis(1,2,3,4,7,7-hexachloro-2-norborneno)-[a,e]cyclooctane), and mixtures thereof with optionally also a zinc borate as a third component.

Exemplary antimony compounds useful in the practice of this invention include antimony trioxide ($Sb_2O_3$), antimony tetraoxide ($Sb_2O_4$), antimony pentoxide ($Sb_2O_5$) and the like with antimony trioxide being particularly preferred.

Examples of the bromo compounds useful in the practice of this invention include tetrabromobisphenol

A represented by the following formula

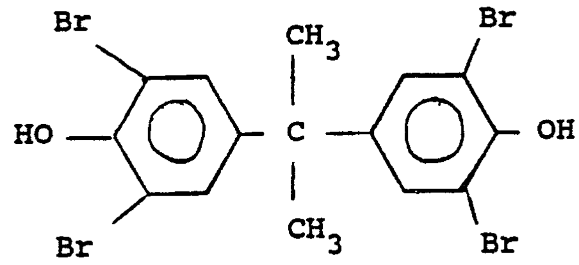

tetrabromobisphenol A carbonate oligomers represented by the following structural formula

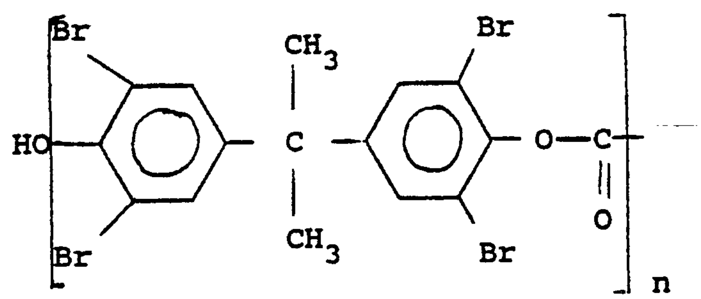

wherein n stands for 1-10, ether derivatives of tetrabromobisphenol A represented by the following formula:

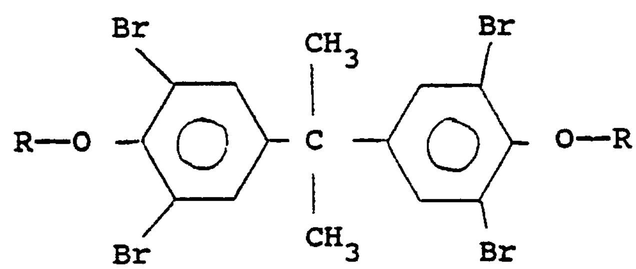

(wherein R and R′ independently mean a $C_{1-13}$ alkyl group which may be substituted by one or more halogen atoms, allyl groups or 2-hydroxyethyl groups), decabromodiphenyl oxide, hexabromobenzene, 1,1,2,2-tetrabromoethane, 1,2,5,6,9,10-hexabromocyclododecane, tris(2,3-dibromopropyl)phosphate, and the like. They may be used in combination. Among the above-exemplified brominated flame retardants, the tetrabromobisphenol A, tetrabromobisphenol A carbonate oligomers and the ether derivatives of tetrabromobisphenol A are preferred. Particularly preferred is tetrabromobisphenol A.

The flame-retardant compounds which may be used in the compositions of the present invention are generally available in the form of fine powders, wherein the average particle size may be in the range of from 0,05 $\mu$ to 100 $\mu$ although smaller or larger average particle sizes are not excluded.

In the context of the present invention the term "flame-retarding quantity" refers to a quantity of a compound as mentioned hereinbefore which is able to generate a sufficient amount of said gaseous compound to have some flame-retarding effect. As some compounds will generate said gaseous compounds more easily than others, said flame-retardant quantity may vary strongly with the nature of the compound. Whatever the nature of said compound may be the quantity wherein it will be used in the present invention will generally comprise a minor part of the ultimate composition.

The flame-retardant compounds will preferably comprise from 2 to 40% m of the total composition, and more preferably from 5-25% m.

The flame retardant compositions may be produced by mixing the flame-retardant compound or mixtures thereof throughout the polyketone polymer. The method of forming the composition is not critical provided the method results in a uniform mixture of said flame-retardant compound throughout at least the outer layer of the polyketone polymer. In a preparation of a composition useful in the form in which it is produced, only the outermost portion of the composition needs to be provided with such flame-retardant

compound. However, in most applications, a flame retardant composition is produced which is then processed further, and in such applications the production of a substantially uniform mixture of polyketone polymer and flame-retardant compound is preferred. In one modification, the compositions are produced by dry blending the components in particulate form and subsequently converted to a substantially uniform composition by application of heat and pressure. Alternatively, the compositions are produced by heating the polyketone polymer until molten and the flame-retardant compound is mixed throughout the polymer by use of a high-shear mixer or extruder.

The polymer composition, in addition to polymer and flame retardant compound, may incorporate other additives which do not detract from the flame retardant character of the composition. Examples of such additives are plasticizers, mould release agents and antioxidants, which are added by blending or other conventional methods, together with or separately from the flame retardant compounds.

The flame retardant compositions may be processed by injection moulding, pressure forming or other conventional methods. They are characterised by properties of flexibility and strength in addition to flame retardancy and are useful in a variety of applications, particularly where exposure to elevated temperature is likely to be encountered.

The invention will be further illustrated by the following examples.

In all Examples, the flame-retarding effect was determined by measuring the Limiting Oxygen Index (L.O.I.) according to ASTM D2863-77. This text measures the minimum concentration of oxygen in an oxygen-nitrogen atmosphere that is necessary to initiate and support a flame for 180 seconds on a test strip.

EXAMPLES I-VIII

Flame retardant compositions were prepared by dry-blending powdered copolymer (a CO-ethene-propene terpolymer having an LVN of 1.90 dl/g and a melting point of 219 °C) and one or more flame retardant compounds of the type and in the ratio as indicated hereinafter and subsequently compression moulded at 250 °C for 3 minutes, to obtain 3 mm thick sheets from which samples were cut for flame retardation testing. The sample formulations and the L.O.I. data are presented in Table 1 together with the flame retardation data of a sample based on the neat polymer. Said Table also includes as a reference a flame-retardant composition containing a chlorinated paraffin as flame retardant agent. In view of the very severe discoloration experienced with said sample no L.O.I. data were determined.

The nature of the flame-retardants is as follows:

1 = Bis(1,2,3,4,7,7-hexachloro-2-norborneno)[a,e]cyclooctane
2 = Decabromodiphenyloxide
3 = $Sb_2O_3$
4 = Hydrated Zinc borate, $2ZnO.3B_2O_3.3.5H_2O$
5 = Chlorinated paraffin

Table I

| Example | Flame-retardant Compound | % m on composition | Colour sheet | L.O.I |
|---|---|---|---|---|
| I | 1 | 20 | white | 25 |
| II | 2 | 20 | " | 34 |
| III | 3 | 20 | " | 25** |
| IV | 4 | 20 | " | 31 |
| V | 1 | 13.3 | " | 32 |
| | 3 | 6.7 | | |
| VI | 1 | 13.3 | " | 30 |
| | 4 | 6.7 | | |
| VII | 2 | 13.3 | " | 41 |
| | 3 | 6.7 | | |
| VIII | 2 | 13.3 | " | 37 |
| | 4 | 6.7 | | |
| Ref A* | - | - | whitish | 19 |
| Ref B | 5 | 20 | black | - |

* Neat polymer

** Sample smoulders for at least 1.5 min

EXAMPLE IX

A linear alternating terpolymer of carbon monoxide, ethene and propene was prepared in the presence of a catalyst composition formed from palladium acetate, the anion of trifluoroacetic acid, and 1,3-bis-(diphenylphosphino)propane. The product had a melting point of 218 °C and an LVN of 1.14 dl/g. Four fillers (talk, mica, surface treated mica and calcium carbonate) and zinc borate were dry blended with the terpolymer at amounts of 20 and 40%, based on the weight of the final blend, on a 15 mm twin-screw extruder. Some foaming occurred, due to the inability of the extruding equipment to devolatilize. The extrudates were then pelletized, dried at 50 °C for 16 hours, and compression moulded into test plaques of 12.5 x 1.25 x 0.32 cm. The Limiting Oxygen Index values were determined and the results are presented in Table II.

Table II

| Experiment | Filler/Flame retardant | Level | L.O.I. |
|---|---|---|---|
| | | (%w) | (%v) |
| 1 | Talc | 20 | 22.5 |
| 2 | Talc | 40 | 26.5 |
| 3 | Mica | 20 | 24.5 |
| 4 | Mica | 40 | 23.5 |
| 5 | Surcace treated mica | 20 | 21.5 |
| 6 | Surcace treated mica | 40 | 29.5 |
| 7 | Calcium carbonate | 20 | 22.5 |
| 8 | Calcium carbonate | 40 | 29.5 |
| 9 | Zinc borate | 20 | 27.5 |
| 10 | Zinc borate | 40 | 30.5 |
| 11 | NONE | 0 | 18.5 |

Only the compositions of experiments 9-10 containing zinc borate, are according to the invention, and

as seen in Table II, they yield the best results.

EXAMPLE X

A blend of two specific, linear alternating terpolymers of carbon monoxide, ethene and 7 %w propene (the one havign a melting point of 220 °C and an LVN of 1.79 dl/g and being present in an amount of 33% by weight, the other having a melting point of 223 °C and an LVN of 1.62 dl/g, being present in an amount of 67% by weight) was formed by dry mixing pellets of the two polymer.

The blended mixture was then further compounded with the aid of a single feed, gentle mixing screw, avoiding a temperature rise and consequent foaming when a selected flame-retardant was added. Thus compositions comprising the terpolymer blend ("polyketone"), zinc borate and calcium carbonate were prepared, in the proportions listed in Table III. The blends were pelletized, dried at 71 °C for 16 hours, and injection moulded into test speciments. Room temperature Notched Izod, Flexural Modulus and LOI test were run. All test results are listed in Table III.

Table III

| Experiment | Polyketone | Zn-borate | $CaCO_3$ | Notched Izod | Flex. Mod. | L.O.I. |
|---|---|---|---|---|---|---|
| | (%w) | (%w) | (%w) | (m.kg/m) | (MPa) | (%v) |
| 1 | 100 | 0 | 0 | 16.31 | 1790 | 17.5 |
| 2 | 80 | 10 | 10 | 5.11 | 2240 | 24.5 |
| 3 | 70 | 20 | 10 | 4.08 | 2830 | 27.5 |
| 4 | 60 | 30 | 10 | 2.83 | 3310 | 30.5 |
| 5 | 75 | 20 | 5 | 4.08 | 2550 | 29.5 |

Only the compositions of experiments 2-5 are according to the invention. It may be concluded from the table that a combination of zinc borate and calcium carbonate gives good flame-retardation, with a moderate stiffness increase.

EXAMPLE XI

A linear alternating terpolymer of carbon monoxide, ethene and 7 %m propene having an LVN of 1.74 dl/g and a melting point of 219 °C, containing 1 %m of a mixture of two commercially available antioxidants, was dry blended with combinations of the compounds listed in Table I. One system employed 20 %m of (2) and 10 %m of (3). The other system employed 5 %m of (3), 5 %m of (4) and 20 %m of (1). LOI values of the two systems were determined, and found to be 52.5 and 42.5, respectively, whereas the neat copolymer showed an LOI value of 17.5. These values are much higher than the values found for compositions containing only one of the selected flame-retardants.

## Claims

1. Flame-retardant polymer compositions comprising a linear alternating copolymer of carbon monoxide and at least one ethylenically unsaturated compound, and at least a flame-retarding quantity of an organohalogen compound containing one or more polyhalogen substituted rings and having a halogen content of at least 50% m, and/or a compound selected from the group consisting of antimony trioxide, metal borates and mixtures thereof.

2. Flame-retardant compositions as claimed in claim 1, wherein the organohalogen compounds are chlorine and/or bromine containing organohalogen compounds.

3. Flame-retardant compositions as claimed in claim 1 or 2, wherein the organohalogen compound is a polyhalogenated cycloaliphatic compound or a polyhalogenated aromatic compound.

4. Flame-retardant compositions as claimed in claim 3, wherein the cycloaliphatic compound is

perchlorodicyclopentadiene, bis(hexachloro-2-norbornene)[a,e]cyclooctane, pentabromochlorocyclohexane or hexabromocyclodecane.

5. Flame-retardant compositions as claimed in claim 3, wherein the aromatic compound is 2,3,4,5,6-pentabromoethylbenzene, 1,2-bis(2,4,6-tribromophenoxy)ethane, decabromodiphenyl oxide, tetrabromobisphenol A, a tetrabromobisphenol A carbonate oligomer, or an ether derivative of tetrabromobisphenol A.

6. Flame-retardant compositions as claimed in claim 3, wherein the organohalogen compound is bis-(hexachloro-2-norborneno)[a,e]cyclooctane or decabromodiphenyl oxide.

7. Flame-retardant compositions as claimed in any of claims 1-6, wherein the flame-retardant compounds comprise from 2-40% m of the total composition.

8. Flame-retardant compositions as claimed in claim 7, wherein the flame-retardant compounds comprise from 5-25% m of the total composition.

9. Flame-retardant compositions as claimed in any of claims 1-8, wherein the alternating copolymer is a carbon monoxide ethylene copolymer or a carbon monoxide-ethylene-propylene terpolymer.

10. Flame-retardant compositions as claimed in claim 9, wherein the ethylene: propylene molar ratio in the terpolymer is at least 3:1.

European Patent Office

# EUROPEAN SEARCH REPORT

Application Number

EP 90 20 0758

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | US-A-4761449 (R.LUTZ)<br>--- | | C08K5/02<br>C08K5/03<br>C08K5/06<br>C08K3/22<br>C08K3/38<br>C08L73/00 |
| X | EP-A-0085834 (GENERAL ELECTRIC COMPANY)<br>* claims 1-4, 6 *<br>* page 4, lines 5 - 9 *<br>* page 9, lines 27 - 30 *<br>--- | 1-10 | |
| X | H.KATZ et al.: "Handbook of Fillers and Reinforcements for Plastics"<br>1978, VAN NOSTRAND REINHOLD COMPANY, New York, US, pages 270,272-273<br>* page 270, right-hand column, lines 27 - 36 *<br>----- | 1-10 | |
| | | | TECHNICAL FIELDS SEARCHED (Int. Cl.5 ) |
| | | | C08K<br>C08L<br>C08G |

The present search report has been drawn up for all claims

| Place of search | Date of completion of the search | Examiner |
|---|---|---|
| THE HAGUE | 09 JULY 1990 | HOFFMANN K.W. |

1

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document